# EUROPÄISCHE PATENTSCHRIFT

(11) **EP 1 258 440 B1**
(45) Veröffentlichungstag und Bekanntmachung des Hinweises auf die Patenterteilung: **01.12.2004**
(21) Anmeldenummer: 02005349.2
(22) Anmeldetag: 14.03.2002
(51) Int. Cl.: B65G 59/00

(54) **Vorrichtung zum Ausrichten und Separieren von einem Werkstückstapel bereitgestellter plattenförmiger Werkstücke**
Device for positioning and separating flat workpieces supplied from a stack of workpieces
Dispositif pour positionner et séparer des pièces plattes à usiner fournies à partir d'une pile de pièces

(30) Priorität: 18.05.2001 DE 10124382
(43) Veröffentlichungstag der Anmeldung: 20.11.2002
(73) Patentinhaber: Ligmatech Automationssysteme GmbH, 09638 Lichtenberg (DE)
(72) Erfinder: Tönnings, Bodo, 09638 Lichtenberg (DE); Nietzold, Axel, 01774 Höckendorf OT Ruppendorf (DE); Brusky, Stefan, 09599 Freiberg (DE)
(74) Vertreter: HOFFMANN - EITLE

(56) Entgegenhaltungen:
- DE-A- 2 516 498
- DE-A- 2 952 011
- DE-U- 20 014 892
- DE-U- 20 105 444
- GB-A- 1 317 277
- US-A- 2 672 244
- US-A- 2 917 205

## Beschreibung

### TECHNISCHES GEBIET

Die vorliegende Erfindung betrifft ein Verfahren und eine Vorrichtung zum Ausrichten und Separieren von in einem Werkstückstapel bereitgestellten plattenförmigen Werkstücken.

Ein solches Verfahren und eine solche Vorrichtung wird beispielsweise im Zusammenhang mit einem nachfolgenden Verpacken der plattenförmigen Werkstücke eingesetzt.

### STAND DER TECHNIK

Bei gestapelten plattenförmigen Werkstücken, und insbesondere, wenn diese Werkstücke eine recht glatte Werkstückoberfläche aufweisen, kommt es zwischen den aufeinander liegenden, sich berührenden Werkstückoberflächen zu einem Adhäsionseffekt, der senkrecht zu der jeweiligen Werkstückoberfläche wesentlich größer als parallel zur Werkstückoberfläche ist. Zum Abheben und damit Separieren eines Werkstückes vom Stapel muss dieser hinderliche Adhäsionseffekt überwunden werden.

Es sind Verfahren und Vorrichtungen zum Ausrichten und Separieren von in einem Werkstückstapel bereitgestellten plattenförmigen Werkstücken bekannt, bei denen ein Werkstückstapel auf einer Rollenbahn gegen zwei zueinander in einem rechten Winkel angeordnete Ausrichtwände gefahren und an diesen in einer Ebene in X- und Y-Richtung ausgerichtet wird. An jeder Ausrichtwand sind eine oder mehrere Bürsten angeordnet, die sich in Vertikalrichtung und über die gesamte Höhe des Werkstückstapels erstrecken. Die Bürsten liegen seitlich am Werkstückstapel und an den Seitenkanten der plattenförmigen Werkstücke an. Die Bürsten besitzen in der Regel synthetische Borsten, Gummilippen oder dergleichen. Die Bürsten dienen dazu, ein Separieren des jeweils obersten Werkstückes im Stapel von dem jeweils darunter liegenden Werkstück zu erleichtern, wenn das oberste Werkstück mittels einer Abhebeeinrichtung oder dergleichen im ausgerichteten Zustand von dem Werkstückstapel abgehoben und weiteren Bearbeitungsschritten zugeführt wird.

Bei den vorbekannten Verfahren und Vorrichtung der zuvor beschriebenen Art muss stets der gesamte Werkstückstapel an den Ausrichtwänden ausgerichtet und gegen die Bürsten angelegt werden, bevor ein einzelnes Werkstück vom Stapel abgehoben werden kann. Je nach Höhe des Stapels und damit in Abhängigkeit des auf die im Stapel befindlichen Werkstücke gewichtsbedingt wirkenden Drucks, der zur Stapelunterseite hin zunimmt, muss das Ausrichten des Werkstückstapels teilweise mit einem nicht unerheblichen Kraftaufwand ausgeführt werden. Zudem wird die Ausrichtgenauigkeit durch die Beschaffenheit, insbesondere die Elastizität, und die Qualität der verwendeten Bürsten, die sich beim Anlegen an die Werkstückkanten stark deformieren, wesentlich beeinflusst. Da die Bürsten mit der Zeit verschleißen bzw. ausgetauschte neue Bürsten nicht immer exakt die gleichen Eigenschaften wie zuvor verwendete Bürsten aufweisen, kann es leicht zu Ungenauigkeiten bei der Ausrichtung kommen. Die zum Separieren eines jeweiligen Werkstückes vom verbleibenden Stapel verwendeten Bürsten sind zwar grundsätzlich dazu geeignet, den senkrecht zu einer jeweiligen Werkstückoberfläche wirkenden Adhäsionseffektes zu mindern, jedoch hat es sich gezeigt, dass ein Abheben eines Werkstückes relativ langsam erfolgen muss, damit es nicht an dem darunter liegenden Werkstück anhaftet. Die Wartezeit (sog. Abtropfzeit) beim Aufnehmen eines Werkstückes sind folglich recht lang.

Auch der mit den Bürsten erzielbare Separationseffekt hängt wiederum von der Beschaffenheit und Qualität der Bürsten ab und variiert zudem stark von der Höhe des Stapels und damit der Druckbelastung der Werkstücke sowie der Oberflächenbeschaffenheit bzw. Rauheit der Werkstückoberflächen.

Insgesamt sind die mit den konventionellen Verfahren und Vorrichtungen erzielbaren Taktzeiten beim Ausrichten und Separieren der plattenförmigen Werkstücke daher relativ gering; und auch hinsichtlich der Präzision und Reproduzierbarkeit des jeweiligen Ausricht- und Separierergebnisses besteht ein Verbesserungsbedarf.

Eine vorbekannte Vorrichtung mit einem Werkstückstapelmagazin, das eine Hubeinrichtung aufweist, und einer abgeschrägten Anschlagseinrichtung zum Separieren und Ausrichten der plattenförmigen Werkstücke ist aus DE-A-200 14 892 bekannt. Eine andere Vorrichtung zum Ausrichten und Separieren ist aus GB-A-1 317 277 bekannt.

### DARSTELLUNG DER ERFINDUNG

Der Erfindung liegt die Aufgabe beziehungsweise das technische Problem zugrunde, eine Vorrichtung zum Ausrichten und Separieren von in einem Werkstückstapel bereitgestellten plattenförmigen Werkstücken zu schaffen, das mit einer höheren Zuverlässigkeit, Präzision und Taktgeschwindigkeit sowie einer verbesserten Reproduzierbarkeit als konventionelle Vorrichtungen arbeitet.

Gemäß der Erfindung wird die oben genannte Aufgabe ferner gelöst durch eine erfindungsgemäße Vorrichtung mit den Merkmalen des Anspruchs 1.

Diese Vorrichtung zum Ausrichten und Separieren von in einem Werkstückstapel bereitgestellten plattenförmigen Werkstücken umfasst: ein Werkstückstapelmagazin, das mit einem Werkstückstapel-Aufnahmebereich und einer Hubeinrichtung ausgestattet ist, mit der ein in dem Aufnahmebereich aufgenommener Werkstückstapel auf ein erstes Bearbeitungsniveau anhebbar und auf ein unterhalb des ersten Bearbeitungsniveau befindliches zweites Bearbeitungsniveau absenkbar ist; eine im Bereich des ersten Bearbeitungsniveaus angeordnete Anschlagseinrichtung zum Ausrichten von mindestens einer, vorzugsweise zwei Werkstückkanten eines Werkstückes; eine Werkstück-Verschiebeeinrichtung zum Verschieben eines jeweils obersten Werkstückes des Werkstückstapels auf dem ersten Bearbeitungsniveau und auf dem jeweils darunter liegenden Werkstück an die Anschlagseinrichtung; und eine Werkstück-Halteeinrichtung zum Festhalten von zumindest einem Teilabschnitt eines ausgerichteten obersten Werkstückes auf dem ersten Bearbeitungsniveau während einer Absenkbewegung der Hubeinrichtung von dem ersten auf das zweite Bearbeitungsniveau.

Das Werkstückstapel-Magazin bzw. dessen Hubeinrichtung kann derart ausgestaltet sein, dass entweder nur der Werkstückstapel selbst, der Werkstückstapel-Aufnahmebereich mit dem Werkstückstapel bzw. das gesamte Werkstückstapelmagazin auf die besagte Art und Weise anhebbar und absenkbar ist.

Gemäß der Erfindung wird die oben genannten Aufgabe überdies gelöst durch eine erfindungsgemäße Vorrichtung mit den Merkmalen des Anspruchs 2.

Diese Vorrichtung zum Ausrichten und Separieren von in einem Werkstückstapel bereitgestellten plattenförmigen Werkstücken, umfasst: ein Werkstückstapel-Magazin mit einem Werkstückstapel-Aufnahmebereich, wobei ein jeweils oberstes Werkstück eines in dem Aufnahmebereich aufgenommenen Werkstückstapels ein erstes Bearbeitungsniveau definiert; eine in Höhenrichtung des Werkstückstapels verstellbare Anschlagseinrichtung zum Ausrichten von mindestens einer Werkstückkante eines jeweiligen obersten Werkstückes; eine in Höhenrichtung des Werkstückstapels verstellbare Werkstück-Verschiebeeinrichtung zum Verschieben eines jeweils obersten Werkstückes des Werkstückstapels auf dem ersten Bearbeitungsniveau und auf dem jeweils darunter liegenden Werkstück an die Anschlagseinrichtung; eine in Höhenrichtung des Werkstückstapels verstellbare Werkstück-Hubeinrichtung, mit der ein jeweils oberstes, ausgerichtetes Werkstück ausgehend von dem jeweiligen ersten Bearbeitungsniveau auf ein oberhalb des ersten Bearbeitungsniveaus befindliches zweites Bearbeitungsniveau anhebbar ist; und eine Werkstück-Halteeinrichtung zum Festhalten von zumindest einem Teilabschnitt eines jeweils ausgerichteten, obersten Werkstückes während einer Hubbewegung der Werkstück-Hubeinrichtung von dem ersten auf das zweite Bearbeitungsniveau.

Diese Vorrichtung arbeitet demnach nach einem Prinzip, dass gewissermaßen die kinematische Umkehr des Prinzips der Vorrichtung gemäß der vorherigen Ausführung darstellt. Die Funktionsprinzipien der erfindungsgemäßen Vorrichtungen können grundsätzlich auch kombiniert werden.

Die erfindungsgemäßen Vorrichtungen besitzen im wesentlichen die gleichen Vorteile wie das nachfolgend beschriebene Verfahren.

Weitere bevorzugte und vorteilhafte Ausgestaltungsmerkmale der erfindungsgemäßen Vorrichtungen sind Gegenstand der Unteransprüche 2 bis 12.

Das Verfahren zum Ausrichten und Separieren von in einem Werkstückstapel bereitgestellten plattenförmigen Werkstücken umfasst folgende Schritte, jedoch nicht zwingenderweise in der gegebenen Reihenfolge:
a) relatives Anheben des Werkstückstapels in einer Z-Richtung auf ein erstes Bearbeitungsniveau,
b) Verschieben eines jeweils obersten Werkstückes des Werkstückstapels auf dem ersten Bearbeitungsniveau und auf dem jeweils darunter liegenden Werkstück an mindestens eine Anschlagseinrichtung,
c) Ausrichten von mindestens einer Werkstückkante des verschobenen obersten Werkstückes an der Anschlagseinrichtung,
d) Festhalten von zumindest einem Teilabschnitt des ausgerichteten obersten Werkstückes auf dem ersten Bearbeitungsniveau, und
e) relatives Absenken des unterhalb des obersten Werkstück befindlichen verbleibenden Werkstückstapels in Z-Richtung auf ein zweites Bearbeitungsniveau, wodurch ein Luftspalt zwischen dem obersten Werkstück und dem darunter liegenden Werkstück erzeugt und dadurch wiederum ein senkrecht zu der Werkstückoberfläche wirkender Adhäsionseffekt aufgehoben und das oberste Werkstück von dem Werkstückstapel separiert wird.

Die Höhe des ersten bzw. zweiten Bearbeitungsniveaus kann beispielsweise in Bezug zu der unteren oder oberen Plattenfläche des jeweils obersten Werkstückes angegeben werden.

Das Anheben des Werkstückstapels auf das erste Bearbeitungsniveau kann zumindest beim erstmaligen Bestücken eines im Rahmen der Ausführung des obengenannten Verfahrens verwendeten Werkstück-Magazins auch durch das Einstapeln der Werkstücke in das Magazin erfolgen. Im laufenden Betrieb erfolgt dann aber das Anheben des bereitgestellten Stapels als solcher. Im Sinne der Erfindung ist das "relative Anheben" des Werkstückstapels auf das erste Bearbeitungsniveau so zu verstehen, dass nicht nur der Stapel selbst bewegt werden kann, sondern ein Anheben auch durch eine reine Relativbewegung zwischen einem unbewegten Stapel und einer entsprechend bewegten Bezugsebene an einem Vorrichtungsgestell oder dergleichen erzielt werden kann. Beispiel: der Stapel bleibt unbewegt stehen, während lediglich die Bezugsebene relativ zu dem Stapel abgesenkt wird.

Das Festhalten von zumindest einem Teilabschnitt des ausgerichteten obersten Werkstücks bzw. das Festhalten des gesamten obersten Werkstückes, umfasst im Sinne der Erfindung auch ein temporäres Ablegen auf einem Bereich der Anschlagseinrichtung. Vorzugsweise wird das oberste Werkstück jedoch mittels einer von der Anschlagseinrichtung unabhängigen, separaten Festhalteeinrichtung gehalten.

Im Sinne der Erfindung ist das "relative Absenken" des unterhalb des obersten Werkstück befindlichen verbleibenden Werkstückstapels auf das zweite Bearbeitungsniveau so zu verstehen, dass nicht nur der Stapel selbst bewegt werden kann, sondern ein Absenken auch durch eine reine Relativbewegung zwischen einem unbewegten Stapel und einem bewegten obersten Werkstück erzielt werden kann. Beispiel: der Stapel bleibt unbewegt stehen, während lediglich das verschobene und ausgerichtete oberste Werkstück relativ zu dem darunter befindlichen verbleibenden Werkstückstapels angehoben wird.

Die durch die Absenkung bedingte Höhendifferenz bzw. der Niveauunterschied zwischen dem ersten und dem zweiten Bearbeitungsniveau liegt vorzugsweise im Bereich einer oder einer halben Plattenstärke des betreffenden Werkstückes. Die Erfindung ist jedoch nicht auf diese Werte beschränkt. Je nach Ausführungsform, der Oberflächenbeschaffenheit bzw. Rauheit und der Abmessung der jeweiligen Werkstücke können die genannten Werte für die Absenkung auch größer oder kleiner sein.

Mit den erfindungsgemäßen Vorrichtungen lassen sich plattenförmige Werkstücke unterschiedlichster Größe und Abmessungen zuverlässig, präzise, rasch und mit einer hohen Reproduzierbarkeit ausrichten und separieren.

Vorteilhafterweise sind bei den erfindungsgemäßen Vorrichtungen das erste und zweite Bearbeitungsniveau grundsätzlich in Fläche und Höhe beliebig wählbar, was eine variable Anpassung an unterschiedlichste Werkstückabmessungen und Stapelgrößen erlaubt.

Anders als bei konventionellen Verfahren, bei denen sogleich der gesamte Werkstückstapel ausgerichtet werden muss, ist es bei den erfindungsgemäßen Vorrichtungen lediglich erforderlich, das oberste Werkstück eines Stapels auszurichten. Dieses Ausrichten erfolgt zudem auf dem jeweils darunter liegenden Werkstück. Für den gesamten Werkstückstapel als solchen hingegen ist eine Grobpositionierung gänzlich ausreichend. Da bei den erfindungsgemäßen Vorrichtungen jeweils nur das oberste Werkstück ausgerichtet wird, und nicht der gesamte Werkstückstapel, ist das Ausrichtungsergebnis unabhängig von der Stapelgröße bzw. -höhe und den damit verbundenen unterschiedlichen Druckbelastung der Werkstücke im Stapel. Zudem ist der Einfluss der Oberflächenbeschaffenheit bzw. Rauheit der Werkstückoberfläche eines einzelnen Werkstückes auf das Verschieben und Ausrichten anders als bei einem gesamten Stapel vernachlässigbar gering. Das

Ausrichtungsergebnis ist deshalb weitaus präziser als bei konventionellen Verfahren. Überdies ist die Handhabung eines einzelnen Werkstückes beim Ausrichten einfacher und mit einem weitaus geringeren Kraftaufwand zu bewerkstelligen als die Handhabung eines gesamten Werkstückstapels.

Aufgrund der Tatsache, dass bei den erfindungsgemäßen Vorrichtungen das Separieren des jeweils obersten Werkstückes von dem darunter liegenden Werkstück bzw. Werkstückstapel durch Festhalten des obersten Werkstückes auf dem ersten Bearbeitungsniveau und relatives Absenken des verbleibenden Werkstückstapels auf ein zweites, unterhalb des ersten Bearbeitungsniveau befindlichen Niveau erfolgt, kann auch auf die von den konventionellen Verfahren her bekannten Bürsten gänzlich verzichtet werden. Dementsprechend entfallen nicht nur die bei konventionellen Verfahren durch die Bürsten bedingten Ungenauigkeiten beim Ausrichten, sondern es wird auch ein von der jeweiligen Oberflächenbeschaffenheit bzw. Rauheit der Werkstücke, der Höhe des Werkstückstapels und damit der unterschiedlichen Druckbelastung der Werkstücke im Stapel nahezu unabhängiger und sehr schneller Separierungseffekt erzielt. Die Reproduzierbarkeit des Separierungsergebnisses ist dabei sehr hoch.

Es hat sich zudem herausgestellt, dass sich aufgrund der zuvor beschriebenen Eigenheiten der erfindungsgemäßen Vorrichtungen, bei denen das Ausrichten des jeweils obersten Werkstückes und das Separieren zwei gänzlich voneinander getrennte Schritte darstellen, gegenüber konventionellen Verfahren erheblich verbesserte Taktzeiten bzw. weitaus geringe Abtropfzeiten realisieren lassen.

Bevorzugte Ausführungsbeispiele der Erfindung mit zusätzliche Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Seitenansicht einer erfindungsgemäßen Vorrichtung gemäß einer ersten Ausgestaltungsform, die zur Ausführung des erfindungsgemäßen Verfahrens geeignet ist,
- Fig. 2: eine schematische Draufsicht auf die erfindungsgemäße Vorrichtung von Fig. 1,
- Fig. 3: eine stark vereinfachte, vergrößerte, teilweise geschnittene Detailansicht der erfindungsgemäßen Vorrichtung entlang der Linie I-I in Fig. 2 in einem ersten Zustand des erfindungsgemäßen Verfahrens gemäß einer ersten Ausführungsform;
- Fig. 4: eine stark vereinfachte, vergrößerte, teilweise geschnittene Detailansicht der erfindungsgemäßen Vorrichtung entlang der Linie I-I in Fig. 2 in einem zweitem Zustand des erfindungsgemäßen Verfahrens gemäß der ersten Ausführungsform;
- Fig. 5: eine stark vereinfachte, vergrößerte, teilweise geschnittene Detailansicht der erfindungsgemäßen Vorrichtung entlang der Linie I-I in Fig. 2 in einem dritten Zustand des erfindungsgemäßen Verfahrens gemäß der ersten Ausführungsform;
- Fig. 6: eine zu der Fig. 3 analoge Darstellungsweise eines ersten Zustands eines erfindungsgemäßen Verfahrens gemäß einer zweiten Ausführungsform;
- Fig. 7: eine zu der Fig. 4 analoge Darstellungsweise eines zweiten Zustands des erfindungsgemäßen Verfahrens gemäß der zweiten Ausführungsform; und
- Fig. 8: eine zu der Fig. 5 analoge Darstellungsweise eines dritten Zustands des erfindungsgemäßen Verfahrens gemäß der zweiten Ausführungsform.

### DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

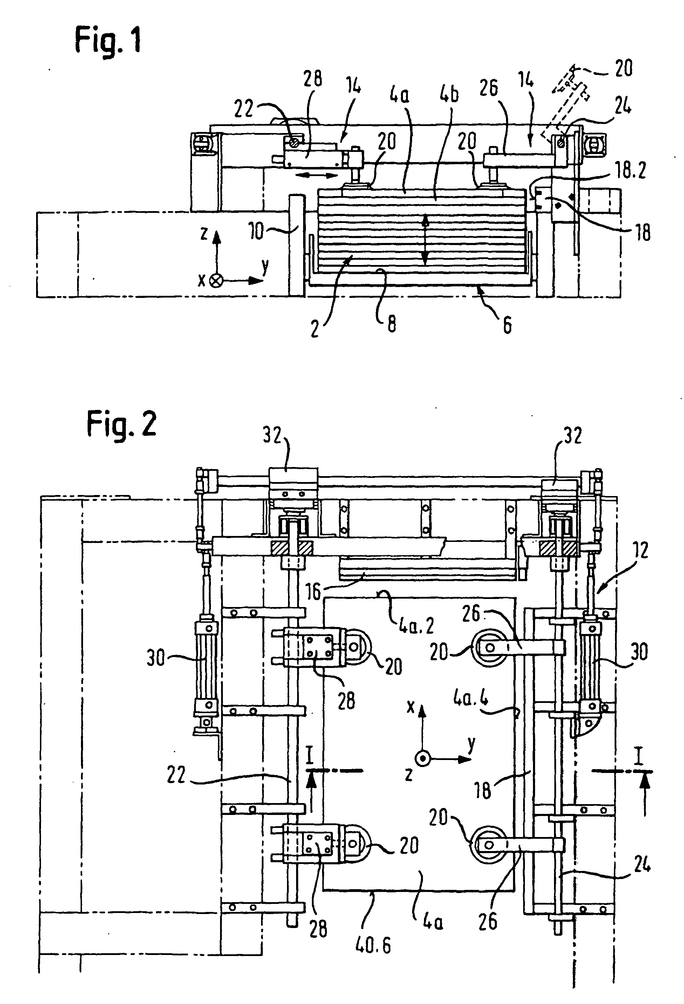

In der Figur 1 ist in einer schematischen Seitenansicht eine erfindungsgemäße Vorrichtung zum Ausrichten und Separieren von in einem Werkstückstapel 2 bereitgestellten plattenförmigen Werkstücken 4 gemäß einer ersten Ausgestaltungsform dargestellt. Für das vorliegende Beispiel wird angenommen, dass die Plattenform der Werkstücke 4 rechteckig ist. Figur 2 zeigt eine schematische Draufsicht auf die erfindungsgemäße Vorrichtung von Figur 1. In diese Figuren ist zur besseren Orientierung ein kartesisches Koordinatensystem mit X-, Y- und Z-Richtung eingezeichnet. Die Z-Richtung stellt im vorliegenden Beispiel eine Höhenrichtung, die X- und Y-Richtung eine Längs- und Querrichtung dar.

Wie in Fig. 1 und 2 erkennbar, umfasst die erfindungsgemäße Vorrichtung ein Werkstückstapel-Magazin 6, das mit einem Werkstückstapel-Aufnahmebereich 8 und einer Hubeinrichtung 10 ausgestattet ist (hier: eine Hubbühne mit einer angetriebenen Rollenbahn). Der Werkstückstapel-Aufnahmebereich 8 ist mit dem Werkstückstapel 2, der eine Vielzahl übereinanderliegender Werkstücke 4 umfasst, bestückt. Die Hubeinrichtung 10 besitzt eine sich über die Höhe des gesamten Werkstückstapels 2 reichende Hubstrecke, so dass der gesamte Werkstückstapel 2 vom obersten 4a bis zum untersten Werkstück 4 des Stapels in Z-Richtung jeweils auf ein erstes, in der Zeichnung kurz oberhalb des obersten Werkstücks 4a des Stapels befindliches erstes Bearbeitungsniveau N1 anhebbar und auf ein unterhalb des ersten Bearbeitungsniveaus N2 befindliches zweites Bearbeitungsniveau N2 absenkbar ist, wie durch einen Doppelpfeil am Werkstückstapel 2 angedeutet.

Die Vorrichtung umfasst ferner eine im Bereich des ersten Bearbeitungsniveaus N1 angeordnete Anschlagseinrichtung 12 zum Ausrichten von im vorliegenden Fall zwei Werkstückkanten eines jeweiligen obersten Werkstückes 4a. Diese Anschlagseinrichtung 12 kann grundsätzlich in Z-Richtung höhenverstellbar ausgebildet sein. Ferner ist die Vorrichtung mit einer Werkstück-Verschiebeeinrichtung zum Verschieben eines jeweils obersten Werkstücks 4a des Werkstückstapels 2 auf dem ersten Bearbeitungsniveau N1 und auf dem jeweils darunter liegenden Werkstück 4b an die Anschlagseinrichtung 12 ausgestattet. Überdies besitzt die Vorrichtung eine Werkstück-Halteeinrichtung zum Festhalten von im vorliegenden Fall mehreren Teilabschnitten eines ausgerichteten obersten Werkstücks 4a auf dem ersten Bearbeitungsniveau N1 während einer Absenkbewegung der Hubeinrichtung 10 von dem ersten N1 auf das zweite Bearbeitungsniveau N2. Im vorliegenden Ausführungsbeispiel bilden die Werkstück-Verschiebeeinrichtung und die Werkstück-Halteeinrichtung eine Funktionseinheit 14.

Die Anschlagseinrichtung 12 ist mit zwei in X- bzw. Y-Richtung verstellbaren Anschlagsleisten 16, 18 ausgestattet, die sich im wesentlichen in einer gemeinsamen Ebene und in einem rechten Winkel zueinander erstrecken und jeweils einer Vorderkante 4a.2 und einer Seitenkante 4a.4 des jeweils obersten Werkstückes 4a zugeordnet sind.

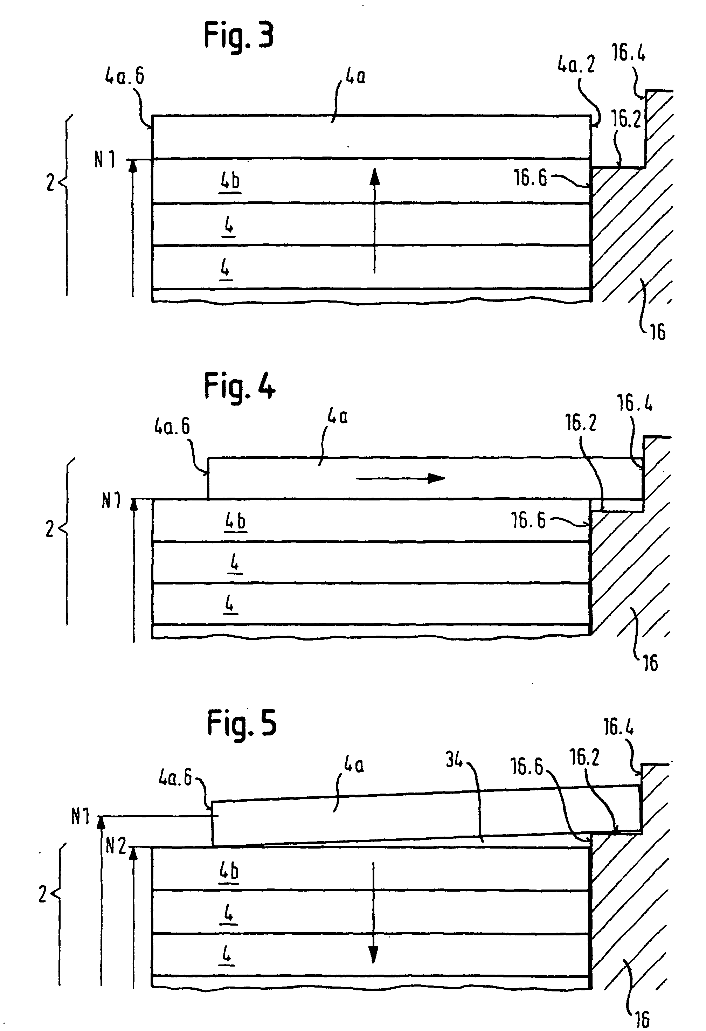

Wie aus der Fig. 3 ersichtlich, die eine vergrößerte, teilweise geschnittene Detailansicht der erfindungsgemäßen Vorrichtung entlang der Linie I-I in Fig. 2 zeigt, ist die erste Anschlagsleiste 16 (für eine Ausrichtung in X-Richtung) mit einer Stufe versehen, deren Stufenoberfläche 16.2 sich geringfügig unterhalb des ersten Bearbeitungsniveaus N1 erstreckt. Wie in Fig. 3 ferner erkennbar, weist die Stufe eine sich oberhalb der Stufenoberfläche 16.2 und in einem im wesentlichen rechten Winkel dazu erstreckende erste Anschlagsfläche 16.4 auf, die der Vorderkante 4a.2 des jeweils obersten Werkstückes 4a zugeordnet ist. Des Weiteren ist die Stufe mit einer sich unterhalb der Stufenoberfläche 16.2 und in einem rechten Winkel dazu erstreckende zweite Anschlagsfläche 16.6 versehen, die mindestens einem im Werkstückstapel 2 jeweils unter dem obersten Werkstück 4a liegenden Werkstück 4b zugeordnet ist.

Die zweite Anschlagsleiste 18 (für eine Ausrichtung in Y-Richtung) besitzt keine Abstufung, sondern eine einfache senkrechte Anschlagsfläche 18.2. Die kombinierte Werkstück-Verschiebe- und 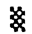 Halte-Einrichtung 14 umfasst eine Saugeinrichtung mit im vorliegenden Fall vier elastisch verformbaren Saugelementen 20, die jeweils an eine nicht gezeigte Evakuierungseinrichtung angeschlossen sind. Diese Saugelemente 20 können beispielsweise aus einem geeigneten Elastomerwerkstoff hergestellt sein. Durch die elastisch verformbare Ausgestaltung der Saugelemente 20 können diese auch noch bei einem Verkanten oder Verkippen des angesauten/festgehaltenen Werkstückes 4a oder bei einem ungleichmäßigen Absenken unterschiedlicher Werkstückebereiche eine Saugwirkung zuverlässig aufrechterhalten und das Werkstück 4a sicher festhalten und entsprechend bewegen.

Wie besonders in Fig. 2 deutlich erkennbar, sind die vier Saugelemente 20 jeweils paarweise an einer sich links und rechts des Werkstückstapels 2 und parallel zu der zweiten Anschlagsleiste 18 erstreckenden Führung gehalten. Die Führung umfasst zwei sich parallel zur zweiten Anschlagsleiste erstreckende Wellen 22, 24. An der in Fig. 2 rechten Welle 24 sind Hebel 26 befestigt, an deren zum Werkstück 4a weisenden freien Ende jeweils ein Saugelement 20 fixiert ist. Bei dem in Fig. 2 auf der linken Seite der Zeichnung dargestellten Saugelementepaar sind die Hebel 26 durch eine Verstelleinrichtung 28 ersetzt, mit der die linken Saugelemente 20 jeweils in Y-Richtung auf die zweite Anschlagsleiste 18 zu und von dieser weg verfahrbar sind. Über Stellglieder 30 sind die jeweiligen Saugelementepaare 20 ferner in X-Richtung auf die erste Anschlagsleiste 16 zu und von dieser weg bewegbar. Darüber hinaus sind die Wellen 22, 24 über einen Antrieb 32 um die Wellenachse herum schwenkbar ausgebildet, so dass die Saugelemente 20 von einer oberhalb des jeweils obersten Werkstückes 4a befindlichen Arbeitsposition (vgl. Fig. 1 und 2) in eine außerhalb des Plattenformats des jeweils obersten Werkstückes befindliche Bereitstellungsposition verschwenkbar sind (vgl. gestrichelte Darstellung eines Saugelementes 20 in Fig. 1).

Es wird nun ein mit der zuvor beschriebenen Vorrichtung gemäß der ersten Ausgestaltungsform ausführbares Verfahren zum Ausrichten und Separieren von in einem Werkstückstapel 2 bereitgestellten plattenförmigen Werkstücken 4 gemäß einer ersten Ausführungsform erläutert werden.

Zunächst einmal wird der Werkstückstapel-Aufnahmebereich 8 des Werkstückstapel-Magazins 6 mit einem Werkstückstapel 2 aus den plattenförmigen, übereinander gelegten Werkstücken 4, die beispielsweise aus einem vorgelagerte Fertigungsbereich antransportiert werden, bestückt. Hierbei wird der Werkstückstapel 2 grob in dem Aufnahmebereich 8 positioniert. Dann wird der gesamte Werkstückstapel 2 mittels der Hubeinrichtung 10 derart angehoben, dass sich die untere Fläche des obersten Werkstückes 4a auf dem ersten Bearbeitungsniveau N1 befindet. Dieser Zustand ist in Fig. 3 erkennbar.

Durch Verschwenken der Saugelemente 20 von ihrer Bereitstellungsposition in die oberhalb des obersten Werkstückes 4a befindliche Arbeitsposition (vgl. Fig. 1 und 2), durch Andrücken der Saugelemente 20 an die obere Werkstückfläche und Aktivieren der Evakuierungseinrichtung wird das oberste Werkstück 4a ergriffen und durch Verfahren der Saugelemente 20 in X- und Y-Richtung auf dem jeweils darunter liegenden Werkstück 4b zu der ersten und zweiten Anschlagsleiste 16, 18 hin verschoben, so dass sich ein Randbereich der Unterseite des obersten Werkstückes 4a über der Stufenoberfläche 16.2 befindet (siehe Fig. 4). Das Verschieben geht sehr leicht vonstatten, da die Adhäsionswirkung parallel zu den aufeinander liegenden Werkstückoberfläche relativ gering ist.

Durch Anlegen der vorderen Werkstückkante 4a.2 an die erste Anschlagsfläche 16.4 der abgestuften ersten Anschlagsleiste 16 und durch Anlegen der Seitenkante 4a.4 an die vertikale Anschlagsfläche 18.2 der zweiten Anschlagsleiste 18 (vgl. Fig. 2) wird das oberste Werkstück 4a dann in X- und Y-Richtung ausgerichtet. Dieser Zustand ist für die X-Richtung ebenfalls in Fig. 4 erkennbar.

Nachdem das oberste Werkstück 4a auf die zuvor beschrieben Art und Weise verschoben und ausgerichtet wurde, bleibt es weiterhin auf dem ersten Bearbeitungsniveau N1 mittels der Saugelemente 20 festgehalten.

Mittels der Hubeinrichtung 10 wird nun der unterhalb des obersten Werkstückes 4a befindliche, verbleibende Werkstückstapel 2 ausgehend von dem ersten Bearbeitungsniveau N1 auf das zweite Bearbeitungsniveau N2 abgesenkt. Dieser Zustand ist in Fig. 5 dargestellt.

Da sich der Randbereich der Unterseite des obersten Werkstückes 4a über der Stufenoberfläche 16.2 befindet und die elastischen Saugelemente 20 sich aufgrund des Eigengewichtes des Werkstückes 4a etwas dehnen können, stützt sich das festgehaltene oberste Werkstück 4a während des Absenken des Werkstückstapels 2 auf das zweite Bearbeitungsniveau N2 mit seinem vorderen Randbereich auf der Kante der Stufenoberfläche 16.2 ab und wird um eine sich im wesentlichen parallel zur ausgerichteten Vorderkante 4a.2 verlaufende Achse leicht gekippt. Während des Kippens des obersten Werkstückes 4a stützt sich dieses mit seiner der ausgerichteten Vorderkante 4a.2 gegenüberliegenden Hinterkante 4a.6 auf dem darunter liegenden Werkstück 4b ab. Die Absenk- und Kippbewegung bewirkt, dass auch der Hinterkantenbereich des festgehaltenen obersten Werkstückes 4a geringfügig abgesenkt wird, während der Vorderkantenbereich im Wesentlichen unverändert auf dem ersten Bearbeitungsniveau N1 bleibt, wie in Fig. 5 deutlich zu erkennen.

Durch das Absenken und die Kippbewegung bildet sich ein keilförmiger Luftspalt 34 zwischen dem obersten Werkstück 4a und dem darunter liegenden Werkstück 4b. Dies wiederum führt dazu, das der zwischen der Unterseite des obersten Werkstückes 4a und der Oberseite des darunter liegenden Werkstückes 4b wirkende starke Adhäsionseffekt aufgehoben und das oberste Werkstück 4a von dem verbleibenden Werkstückstapel 2 separiert wird.

Es sei an dieser Stelle nochmals angemerkt, dass die elastisch deformierbaren Saugelemente 20, wie bereits zuvor erwähnt, die Kippbewegung des obersten Werkstückes 4a und den dadurch verursachten Höhenunterschied zwischen den in der Nähe der ersten Anschlagsleiste 16 befindlichen Saugelementen 20 und den in der Nähe der Werkstückhinterkante 4a.6 angreifenden Saugelementen 20 ohne eine Beeinträchtigung ihrer Saug- und Festhaltewirkung ertragen. Sofern starre Saugelemente verwendet werden, so müssen diese z.B. entsprechend gelenkig gehalten sein.

Durch Deaktivieren der Evakuierungseinrichtung wird nun die Festhaltewirkung der Saugelemente 20 aufgehoben. Und die Saugelemente 20 werden wieder in ihre Bereitstellungsposition zurück geschwenkt (vgl. Fig. 1) . Mittels einer der Übersichtlichkeit halber nicht dargestellten Handlingeinrichtung, wie z.B. einem Roboter oder einer Saugtraverse, kann das präzise ausgerichtete, separierte oberste Werkstück 4a nun vom verbleibenden Werkstückstapel 2 abgenommen und weiteren Bearbeitungsschritten, z.B. zum Verpacken des plattenförmigen Werkstückes 4a in einem Karton, zugeführt werden.

Für das nachfolgende, neue oberste Werkstück erfolgt der zuvor beschriebenen Verfahrensablauf analog.

Es wird nun ein mit einer zweiten Ausgestaltungsform einer erfindungsgemäßen Vorrichtung ausführbares Verfahren zum Ausrichten und Separieren von in einem Werkstückstapel 2 bereitgestellten plattenförmigen Werkstücken 4 gemäß einer zweiten Ausführungsform beschrieben werden.

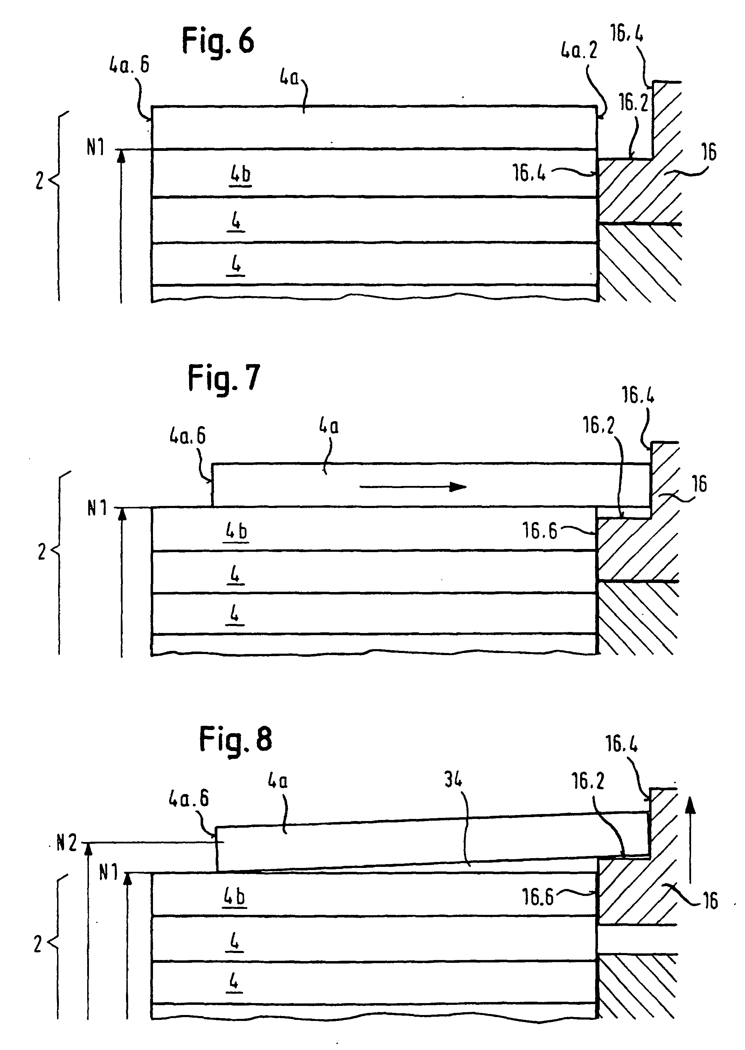

In diesem Zusammenhang wird auf die Fig. 6 bis 7 Bezug genommen. Hierbei zeigt die Fig. 6 in einer zu der Fig. 3 analogen Darstellungsweise einen ersten Zustand des erfindungsgemäßen Verfahrens gemäß einer zweiten Ausführungsform, Fig. 7 in einer zu der Fig. 4 analogen Darstellungsweise einen zweiten Zustand des erfindungsgemäßen Verfahrens gemäß der zweiten Ausführungsform, und Fig. 8 in einer zu der Fig. 5 analogen Darstellungsweise einen dritten Zustand des erfindungsgemäßen Verfahrens gemäß der zweiten Ausführungsform.

Das erfindungsgemäße Verfahren gemäß der zweiten Ausführungsform ist beispielsweise mit einer erfindungsgemäßen Vorrichtung ausführbar, die u.a. folgende Komponenten umfasst:
ein Werkstückstapel-Magazin mit einem Werkstückstapel-Aufnahmebereich, wobei ein jeweils oberstes Werkstück eines in dem Aufnahmebereich aufgenommenen Werkstückstapels 2 ein erstes Bearbeitungsniveau N1 definiert; eine in Höhenrichtung Z des Werkstückstapels 2 verstellbare Anschlagseinrichtung zum Ausrichten von mindestens einer Werkstückkante eines jeweiligen obersten Werkstückes 4a; eine in Höhenrichtung Z des Werkstückstapels 2 verstellbare Werkstück-Verschiebeeinrichtung zum Verschieben eines jeweils obersten Werkstückes 4a des Werkstückstapels 2 auf dem ersten Bearbeitungsniveau N1 und auf dem jeweils darunter liegenden Werkstück 4b an die Anschlagseinrichtung; eine in Höhenrichtung Z des Werkstückstapels 2 verstellbare Werkstück-Hubeinrichtung, mit der ein jeweils oberstes, ausgerichtetes Werkstück ausgehend von dem jeweiligen ersten Bearbeitungsniveau N1 auf ein oberhalb des ersten Bearbeitungsniveaus N1 befindliches zweites Bearbeitungsniveau N2 anhebbar ist; und eine Werkstück-Halteeinrichtung zum Festhalten von zumindest einem Teilabschnitt eines jeweils ausgerichteten, obersten Werkstückes 4a während einer Hubbewegung der Werkstück-Hubeinrichtung von dem ersten N1 auf das zweite Bearbeitungsniveau N2.

Diese Vorrichtung unterscheidet sich von der in den Fig. 1 bis 5 gezeigten Vorrichtung im Wesentlichen dadurch, dass das Werkstückstapel-Magazin mit einem Werkstückstapel-Aufnahmebereich stationär angeordnet ist und keine Hubeinrichtung aufweist, so dass der Werkstückstapel 2 selbst also nicht angehoben werden kann; dass die Anschlagseinrichtung höhenverstellbar ausgebildet ist und für jedes einzelne Werkstück 4 des Stapels 2 in ein pro Werkstück jeweils unterschiedliches erste N1 und zweites Bearbeitungsniveau N2 verfahren werden kann; dass die Werkstück-Verschiebeeinrichtung und die Werkstück-Festhalteeinrichtung höhenverstellbar sind; und dass anstelle der Hubeinrichtung des Werkstückstapel-Magazin eine höhenverstellbare Werkstück-Hubeinrichtung vorgesehen ist.

Diese Werkstück-Hubeinrichtung umfasst im vorliegenden Ausführungsbeispiel die in Z-Richtung höhenverstellbare Anschlagseinrichtung. Genauer gesagt sind die erste 16 und die zweite Anschlagsleiste 18, von denen in den Fig. 6 bis 8 nur die erste, abgestufte Anschlagsleiste 16 sichtbar ist, höhenverstellbar ausgebildet. Ähnlich wie in der in den Fig. 1 bis 5 gezeigten Variante sind auch im vorliegenden Fall die höhenverstellbare Verschiebeeinrichtung und die Festhalteeinrichtung zu einer höhenverstellbaren Funktionseinheit zusammengefasst.

Zur Ausführung des erfindungsgemäßen Verfahrens werden die beiden Anschlagsleisten 16, 18 auf das Niveau des obersten Werkstückes 4a des Stapels 2 gefahren, so dass die erste, abgestufte Anschlagsleiste 16 die in Fig. 6 gezeigte Position vor der Vorderkante 4a.2 und die zweite Anschlagsleiste 18 eine Position seitlich neben der Seitenkante 4a.4 des obersten Werkstückes 4a einnimmt. Dadurch ist das erste Bearbeitungsniveau N1 festgelegt.

Dann wird das oberste Werkstück 4a mittels der kombinierten Verschiebe- und Festhalteeinrichtung auf dem darunter liegenden Werkstück 4b gegen die Anschlagsleisten 16, 18 verschoben und dadurch ausgerichtet. Die Werkstückvorderkante gelangt hierbei wiederum über die Stufenoberfläche 16.2. Das oberste Werkstück 4a bleibt weiter festgehalten.

Nun wird das oberste Werkstück 4a mittels der als Werkstück-Hubeinrichtung fungierenden zweiten Anschlagsleiste 16, d.h. mit der unter die vordere Unterkante des obersten Werkstückes 4a greifende Stufenoberfläche 16.2 ausgehend von dem ersten Bearbeitungsniveau N1 auf ein oberhalb des ersten Bearbeitungsniveaus N1 befindliches zweites Bearbeitungsniveau N2 angehoben. Das Werkstück 4a bleibt bei diesem Vorgang weiterhin festgehalten.

Es stellt sich der gleiche Kipp- und Separierungseffekt ein, wie er bereits in Zusammenhang mit Fig. 5 erläutert wurde.

Es ist ersichtlich, dass das Anheben des obersten Werkstückes 4a ausgehend von dem stationären Werkstückstapel 2 relativ von der bewegten zweiten Anschlagsleiste 16 betrachtet einem Absenken eines bewegten, unterhalb des obersten Werkstücks 4a befindlichen verbleibenden Werkstückstapels 2 in Z-Richtung entspricht.

Auf die bereits im Zusammenhang mit der ersten Ausführungsform beschriebene Art und Weise kann das präzise ausgerichtete, separierte oberste Werkstück 4a nun vom verbleibenden Werkstückstapel 2 abgenommen und weiteren Bearbeitungsschritten zugeführt werden.

Für das neue oberste Werkstück des verbliebenen Stapels 2 werden die beiden Anschlagsleisten 16, 18 wieder so weit heruntergefahren, dass ein neues erstes Bearbeitungsniveau N1 festgelegt wird, welches niedriger als das erstes Bearbeitungsniveau N1 des vorangegangenen obersten Werkstückes ist. Die weiteren Verfahrensschritte erfolgen dann wieder analog.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs können das erfindungsgemäße Verfahren und die erfindungsgemäße Vorrichtung vielmehr auch andere als die oben beschriebenen Ausgestaltungsformen annehmen. Das Verfahren und die Vorrichtung können hierbei insbesondere Merkmale aufweisen, die eine Kombination aus den jeweiligen Einzelmerkmalen der zugehörigen Ansprüche darstellen.

Obwohl in dem obigen Ausführungsbeispiel das erfindungsgemäßen Verfahren und die erfindungsgemäße Vorrichtung nur in Verbindung mit einem Werkstückstapel beschrieben wurden, der einzelne, übereinander geordnete Werkstücke enthält, ist die erfindungsgemäße Lösung auch auf Werkstückstapel anwendbar, bei denen in einer Ebene des Stapels mehrere Werkstücke nebeneinander und/oder hintereinander angeordnet sind. Diese Werkstücke können auf analoge Art und Weise nebeneinander und/oder hintereinander verschoben, ausgerichtet, festgehalten und durch das beschriebene Absenken des darunter liegenden verbleibenden Werkstückstapels separiert werden. Ebenso ist es möglich, anstelle eines einzelnen obersten Werkstückes eine kleine Gruppe von obersten Werkstücken (z.B. zwei. drei oder vier Werkstücke), jedoch nicht den gesamten Werkstückstapel in einem Arbeitsgang zu verschieben, auszurichten, festzuhalten und durch das besagte Absenken zu separieren. Anstelle das jeweils oberste Werkstück bzw. eine kleine Gruppe von obersten Werkstücken auf die oben beschriebene Art und Weise zu kippen, ist es darüber hinaus ebenso möglich, das Werkstückstapel-Magazin, dessen Werkstückstapel-Aufnahmebereich oder dessen Hubeinrichtung kippbar auszugestalten und entsprechend zu verkippen.

Sofern die Anschlagseinrichtung der erfindungsgemäßen Vorrichtung mit 2 Anschlagsleisten ausgestattet ist, so müssen diese nicht zwingenderweise in einem Winkel von 90° zueinander angeordnet sein. So ist es beispielsweise denkbar, dass sich die zwei Anschlagsleisten im Falle der Bearbeitung von z.B. dreieckigen oder trapezförmigen plattenförmigen Werkstücken in einem Winkel größer oder kleiner als 90° zueinander erstrecken. Die erfindungsgemäßen Vorrichtung kann über zusätzliche Anschlagleisten, zum Beispiel für die zweite Seitenkante und/oder die Hinterkante des Werkstückes verfügen.

Die Werkstück-Verschiebeeinrichtung und die Werkstück-Festhalteeinrichtung können anders als in dem obigen Ausführungsbeispiel selbstverständlich auch als zwei voneinander gänzlich separate Einrichtungen ausgestaltet werden.

Anstelle der bewegbar angeordneten Saugelemente kann die Verschiebeeinrichtung beispielweise auch mit rein mechanisch wirkenden Schiebern aus gestattet sein, die in Längs- und Querrichtung der Werkstücke angreifen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Werkstückstapel
- 4: Plattenförmige Werkstücke
- 4a: Oberstes Werkstück im Stapel 2
- 4a.2: Vorderkante von 4a
- 4a.3: Seitenkante von 4a
- 4a.6: Hinterkante von 4a
- 4b: Unter 4a liegendes Werkstück
- 6: Werkstückstapel-Magazin
- 8: Werkstückstapel-Aufnahmebereich von 6
- 10: Hubeinrichtung von 6
- 12: Anschlagseinrichtung
- 14: Werkstück-Verschiebe- und -halteeinrichtung
- 16: Erste, abgestufte Anschlagsleiste von 12
- 16.2: Stufenoberfläche von 16
- 16.4: Erste Anschlagsfläche von 16
- 16.6: Zweite Anschlagsfläche von 16
- 18: Zweite Anschlagsleiste von 12
- 18.2: Vertikale Anschlagsfläche von 18
- 20: Saugelemente
- 22: Welle
- 24: Welle
- 26: Hebel
- 28: Verstelleinrichtung
- 30: Stellglieder
- 32: Antrieb
- 34: Keilförmiger Luftspalt

- N1: Erstes Bearbeitungsniveau
- N2: Zweites Bearbeitungsniveau
- X: Längsrichtung
- Y: Querrichtung
- Z: Höhenrichtung

## Patentansprüche

1. Vorrichtung zum Ausrichten und Separieren von in einem Werkstückstapel (2) bereitgestellten plattenförmigen Werkstücken (4, 4a, 4b), umfassend
- ein Werkstückstapel-Magazin (6), das mit einem Werkstückstapel-Aufnahmebereich (8) und einer Hubeinrichtung (10) ausgestattet ist, mit der ein in dem Aufnahmebereich (8) aufgenommener Werkstückstapel (2) auf ein erstes Bearbeitungsniveau (N1) anhebbar und auf ein unterhalb des ersten Bearbeitungsniveaus (N1) befindliches zweites Bearbeitungsniveau (N2) absenkbar ist,
- eine im Bereich des ersten Bearbeitungsniveaus (N1) angeordnete Anschlagseinrichtung (16, 18) zum Ausrichten von mindestens einer Werkstückkante (4a.2, 4a.4) eines jeweiligen obersten Werkstückes (4 a),
- eine Werkstück-Verschiebeeinrichtung (14, 20) zum Verschieben eines jeweils obersten Werkstückes (4a) des Werkstückstapels (2) auf dem ersten Bearbeitungsniveau (N1) und auf dem jeweils darunter liegenden Werkstück (4b) an die Anschlagseinrichtung (16, 18),
- eine Werkstück-Halteeinrichtung (14, 20) zum Festhalten von zumindest einem Teilabschnitt eines ausgerichteten obersten Werkstückes (4a) auf dem ersten Bearbeitungsniveau (N1) während einer Absenkbewegung der Hubeinrichtung (10) von dem ersten (N1) auf das zweite Bearbeitungsniveau (N2), **dadurch gekennzeichnet, daß** die Anschlagseinrichtung mindestens eine Anschlagsleiste (16) besitzt, die mit einer Stufe versehen ist, deren Stufenoberfläche (16.2) sich unterhalb des ersten Bearbeitungsniveaus (N1) erstreckt, und, dass die Stufe eine sich oberhalb der Stufenoberfläche (16.2) und in einem Winkel dazu erstreckende erste Anschlagsfläche (16.4) aufweist, die dem jeweils obersten Werkstück (4a) zugeordnet ist.

2. Vorrichtung zum Ausrichten und Separieren von in einem Werkstückstapel (2) bereitgestellten plattenförmigen Werkstücken (4, 4a, 4b), umfassend
- ein Werkstückstapel-Magazin (6) mit einem Werkstückstapel-Aufnahmebereich (8), wobei ein jeweils oberstes Werkstück (4a) eines in dem Aufnahmebereich (8) aufgenommenen Werkstückstapels (2) ein erstes Bearbeitungsniveau (N1) definiert,
- eine in Höhenrichtung (Z) des Werkstückstapels verstellbare Anschlagseinrichtung (16, 18) zum Ausrichten von mindestens einer Werkstückkante (4a.2, 4a.4) eines jeweiligen obersten Werkstückes (4a),
- eine in Höhenrichtung (Z) des Werkstückstapels (2) verstellbare Werkstück-Verschiebeeinrichtung (14, 20) zum Verschieben eines jeweils obersten Werkstückes (4a) des Werkstückstapels (2) auf dem ersten Bearbeitungsniveau (N1) und auf dem jeweils darunter liegenden Werkstück (4b) an die Anschlagseinrichtung (16, 18),
- eine in Höhenrichtung (Z) des Werkstückstapels (2) verstellbare Werkstück-Hubeinrichtung (16), mit der ein jeweils oberstes, ausgerichtetes Werkstück (4a) ausgehend von dem jeweiligen ersten Bearbeitungsniveau (N1) auf ein oberhalb des ersten Bearbeitungsniveaus befindliches zweites Bearbeitungsniveau (N2) anhebbar ist, und
- eine in Höhenrichtung (Z) des Werkstückstapels (2) verstellbare Werkstück-Halteeinrichtung (14, 20) zum Festhalten von zumindest einem Teilabschnitt eines jeweils ausgerichteten, obersten Werkstückes (4a) während einer Hubbewegung der Werkstück-Hubeinrichtung (16) von dem ersten (N1) auf das zweite Bearbeitungsniveau (N2), wobei die Werkstück-Hubeinrichtung die in Z-Richtung höhenverstellbare Anschlagseinrichtung (16) umfasst, wobei die Anschlagseinrichtung mindestens eine Anschlagsleiste (16) besitzt, die mit einer Stufe versehen ist, deren Stufenoberfläche (16.2) sich unterhalb des ersten Bearbeitungsniveaus (N1) erstreckt und wobei die Stufe eine sich oberhalb der Stufenoberfläche (16.2) und in einem Winkel dazu erstreckende erste Anschlagsfläche (16.4) aufweist, die dem jeweils obersten Werkstück (4a) zugeordnet ist.

3. Vorrichtung nach Anspruch 1 oder 2,
**dadurch gekennzeichnet, dass**
die Stufe eine sich unterhalb der Stufenoberfläche (16.2) und in einem Winkel dazu erstreckende zweite Anschlagsfläche (16.4) aufweist, die einem im Werkstückstapel (2) jeweils unter dem obersten Werkstück (4a) liegenden Werkstück (4b) zugeordnet ist.

4. Vorrichtung nach mindestens einem der vorher genannten Ansprüche 1 bis 3,
**dadurch gekennzeichnet, dass**
die Anschlagseinrichtung mindestens zwei Anschlagsleisten (16, 18) umfasst, die sich in einem Winkel zueinander erstrecken und jeweils unterschiedlichen Kanten (4a.2, 4a.4) des jeweils obersten Werkstückes (4) zugeordnet sind.

5. Vorrichtung nach Anspruch 4,
**dadurch gekennzeichnet, dass**
von den zwei Anschlagsleisten (16, 18) mindestens eine die abgestufte Anschlagsleiste (16) ist.

6. Vorrichtung nach mindestens einem der vorher genannten Ansprüche 1 bis 5,
**dadurch gekennzeichnet, dass**
die Anschlagseinrichtung (16, 18) in Z-Richtung höhenverstellbar ist.

7. Vorrichtung nach mindestens einem der vorher genannten Ansprüche 1 bis 6,
**dadurch gekennzeichnet, dass**
die Werkstück-Verschiebeeinrichtung (14, 20) und/oder die Werkstück-Halteeinrichtung (14, 20) mindestens eine Saugeinrichtung (20) umfassen.

8. Vorrichtung nach Anspruch 7,
**dadurch gekennzeichnet, dass**
die Saugeinrichtung (20) in einer X-Richtung auf die mindestens eine Anschlagseinrichtung (16) zu und von dieser weg und/oder in einer dazu im Wesentlichen senkrechten Y-Richtung verfahrbar (30, 32) angeordnet ist.

9. Vorrichtung nach Anspruch 7 oder 8,
**dadurch gekennzeichnet, dass**
die mindestens eine Saugeinrichtung (20) von einer oberhalb des obersten Werkstückes (4a) befindlichen Arbeitsposition in eine außerhalb eines Plattenformates des obersten Werkstückes (4a) befindliche Bereitstellungsposition verstellbar (22, 24) ist.

10. Vorrichtung nach mindestens einem der vorher genannten Ansprüche 7 bis 9,
**dadurch gekennzeichnet, dass**
die Saugeinrichtung mindestens ein elastisch verformbares Saugelement (20) besitzt.

11. Vorrichtung nach mindestens einem der vorher genannten Ansprüche,
**dadurch gekennzeichnet, dass**
die Werkstück-Verschiebeeinrichtung und die Werkstück Halteeinrichtung eine Funktionseinheit (14) bilden.

12. Vorrichtung nach mindestens einem der vorher genannten Ansprüche,
**dadurch gekennzeichnet, dass**
das Werkstückstapel-Magazin (6) und/oder dessen Werkstückstapel-Aufnahmebereich (8) und/oder dessen Hubeinrichtung (10) kippbar ausgestaltet ist.

## Claims

1. Device for aligning and separating lamellar workpieces (4, 4a, 4b) provided in a workpiece stack (2), comprising
- a workpiece stack magazine (6) which is equipped with a workpiece stack receiving region (8) and a stroke device (10), with which a workpiece stack (2) received in the receiving region (8) can be raised to a first processing level (N1) and can be lowered to a second processing level (N2) situated below the first processing level (N1),
- a stop device (16, 18) arranged in the region of the first processing level (N1) for aligning at least one workpiece edge (4a.2, 4a.4) of a particular uppermost workpiece (4a),
- a workpiece displacement device (14, 20) for displacing a particular uppermost workpiece (4a) of the workpiece stack (2) on the first processing level (N1) and on the particular workpiece (4b) lying underneath at the stop device (16, 18),
- a workpiece holding device (14, 20) for holding at least one part section of an aligned uppermost workpiece (4a) on the first processing level (N1) during a lowering movement of the stroke device (10) from the first (N1) to the second processing level (N2), **characterised in that** the stop device has at least one stop strip (16), which is provided with a step, the step surface (16.2) of which extends below the first processing level (N1), and **in that** the step has a first stop surface (16.4) extending above the step surface (16.2) and at an angle thereto, and which is assigned to the particular uppermost workpiece (4a).

2. Device for aligning and separating lamellar workpieces (4, 4a, 4b) provided in a workpiece stack (2), comprising
- a workpiece stack magazine (6) having a workpiece stack receiving region (8), wherein a particular uppermost workpiece (4a) of a workpiece stack (2) received in the receiving region (8) defines a first processing level (N1),
- a stop device (16, 18,) which can be adjusted in height direction (Z) of the workpiece stack for aligning at least one workpiece edge (4a.2, 4a.4) of a particular uppermost workpiece (4a),
- a workpiece displacement device (14, 20), which can be adjusted in height direction (Z) of the workpiece stack (2) for displacing a particular uppermost workpiece (4a) of the workpiece stack (2) on the first processing level (N1) and on the particular workpiece (4b) lying underneath at the stop device (16, 18),
- a workpiece stroke device (16), which can be adjusted in height direction (Z) of the workpiece stack (2), and with which a particular uppermost, aligned workpiece (4a) can be raised starting from the particular first processing level (N1) to a second processing level (N2) situated above the first processing level, and
- a workpiece holding device (14, 20), which can be adjusted in height direction (Z) of the workpiece stack (2), for holding at least one part section of a particular aligned, uppermost workpiece (4a) during a stroke movement of the workpiece stroke device (16) from the first (N1) to the second processing level (N2), wherein the workpiece stroke device comprises the stop device (16) which can be height-adjusted in Z direction, wherein the stop device has at least one stop strip (16), which is provided with a step, the step surface (16.2) of which extends below the first processing level (N 1) and wherein the step has a first stop surface (16.4) extending above the step surface (16.2) and at an angle thereto, and which is assigned to the particular uppermost workpiece (4a).

3. Device according to claim 1 or 2, **characterised in that** the step has a second stop surface (16.4) extending below the step surface (16.2) and at an angle thereto, and which is assigned to a workpiece (4b) lying in the workpiece stack (2) in each case below the uppermost workpiece (4a).

4. Device according to at least one of the previously mentioned claims 1 to 3, **characterised in that** the stop device comprises at least two stop strips (16, 18), which extend at an angle to one another and are assigned in each case to different edges (4a.2, 4a.4) of the particular uppermost workpiece (4).

5. Device according to claim 4, **characterised in that** of the two stop strips (16, 18), at least one is the graduated stop strip (16).

6. Device according to at least one of the previously mentioned claims 1 to 5, **characterised in that** the stop device (16, 18) is height-adjustable in Z direction.

7. Device according to at least one of the previously mentioned claims 1 to 6, **characterised in that** the workpiece displacement device (14, 20) and/or the workpiece holding device (14, 20) comprise at least one suction device (20).

8. Device according to claim 7, **characterised in that** the suction device (20) is arranged to be moveable (30, 32) in an X direction on the at least one stop device (16) towards and away from the latter and/or in a Y direction essentially vertical thereto.

9. Device according to claim 7 or 8, **characterised in that** the at least one suction device (20) can be adjusted (22, 24) from a working position situated above the uppermost workpiece (4a) into a ready position situated outside of the panel size of the uppermost workpiece (4a).

10. Device according to at least one of the previously mentioned claims 7 to 9, **characterised in that** the suction device has at least one resiliently deformable suction element (20).

11. Device according to at least one of the previously mentioned claims, **characterised in that** the workpiece displacement device and the workpiece holding device form a functional unit (14).

12. Device according to at least one of the previously mentioned claims, **characterised in that** the workpiece stack magazine (6) and/or its workpiece stack receiving region (8) and/or its stroke device (10) is designed to be tiltable.

## Revendications

1. Dispositif pour le positionnement et la séparation de pièces (4, 4a, 4b) en forme de plaque mises à disposition dans une pile (2) de pièces, comportant
- un magasin (6) de pile de pièces, qui est pourvu d'une zone de réception (8) de pile de pièces et d'un dispositif de levage (10), avec lequel une pile (2) de pièces réceptionnée dans la zone de réception (8) peut être soulevée sur un premier niveau de traitement (N1), et abaissée sur un deuxième niveau de traitement (N2) situé au-dessous du premier niveau de traitement (N1),
- un dispositif de butée (16, 18) agencé dans la zone du premier niveau de traitement (N1) pour le positionnement d'au moins un bord de pièce (4a.2, 4a.4) d'une pièce (4a) supérieure respective,
- un dispositif de translation (14, 20) de pièces, pour la translation d'une pièce (4a) respectivement supérieure de la pile (2) de pièces sur le premier niveau de traitement (N1), et sur la pièce (4b) située respectivement au-dessous contre le dispositif de butée (16, 18),
- un dispositif de retenue (14, 20) de pièces, pour la retenue d'au moins un tronçon partiel d'une pièce (4a) supérieure positionnée sur le premier niveau de traitement (N1) pendant un mouvement d'abaissement du dispositif de levage (10) du premier niveau de traitement (N1) sur le deuxième niveau de traitement (N2),
**caractérisé en ce que** le dispositif de butée comporte au moins une barre de butée (16) qui est munie d'un gradin, dont la surface (16.2) de gradin s'étend au-dessous du premier niveau de traitement (N1), et **en ce que** le gradin comporte une première surface de butée (16.4) s'étendant au-dessus de la surface (16.2) de gradin et suivant un angle par rapport à cette dernière, qui est associée à la pièce (4a) respectivement supérieure.

2. Dispositif pour le positionnement et la séparation de pièces (4, 4a, 4b) en forme de plaque mises à disposition dans une pile (2) de pièces, comportant
- un magasin (6) de pile de pièces avec une zone de réception (8) de pile de pièces, une pièce (4a) respectivement supérieure d'une pile (2) de pièces réceptionnée dans la zone de réception (8) définissant un premier niveau de traitement (N1),
- un dispositif de butée (16, 18) pouvant être déplacé en hauteur dans la direction (Z) de la pile de pièces pour le positionnement d'au moins un bord de pièce (4a.2, 4a.4) d'une pièce (4a) supérieure respective,
- un dispositif de translation (14, 20) de pièces pouvant être déplacé en hauteur dans la direction (Z) de la pile (2) de pièces, pour la translation d'une pièce (4a) respectivement supérieure de la pile (2) de pièces sur le premier niveau de traitement (N1), et sur la pièce (4b) située respectivement au-dessous contre le dispositif de butée (16, 18),
- un dispositif de levage (16) de pièces pouvant être déplacé en hauteur dans la direction (Z) de la pile (2) de pièces, avec lequel une pièce (4a) respectivement supérieure positionnée peut être soulevée du premier niveau respectif de traitement (N1) sur un deuxième niveau de traitement (N2) situé au-dessus du premier niveau de traitement, et
- un dispositif de retenue (14, 20) de pièces pouvant être déplacé en hauteur dans la direction (Z) de la pile (2) de pièces, pour la retenue d'au moins un tronçon partiel d'une pièce (4a) supérieure respectivement positionnée pendant un mouvement de relevage du dispositif de levage (16) de pièces du premier niveau de traitement (N1) sur le deuxième niveau de traitement (N2),
le dispositif de levage de pièces comportant le dispositif de butée (16) pouvant être déplacé en hauteur dans la direction Z,
le dispositif de butée comportant au moins une barre de butée (16) qui est munie d'un gradin, dont la surface (16.2) de gradin s'étend au-dessous du premier niveau de traitement (N1), et le gradin comportant une première surface de butée (16.4) s'étendant au-dessus de la surface (16.2) de gradin et suivant un angle par rapport à cette dernière, qui est associée à la pièce (4a) respectivement supérieure.

3. Dispositif selon la revendication 1 ou 2,
**caractérisé en ce que**
le gradin comporte une deuxième surface de butée (16.4), qui s'étend sous la surface (16.2) de gradin et suivant un angle par rapport à cette dernière, qui est associée à la pièce (4b) située respectivement sous la pièce supérieure (4a) dans une pile (2) de pièces.

4. Dispositif selon l'une au moins des revendications précédentes 1 à 3,
**caractérisé en ce que**
le dispositif de butée comporte au moins deux barres de butée (16, 18), qui s'étendent suivant un angle l'une par rapport à l'autre, et qui sont respectivement associées à différents bords (4a.2, 4a.4) de la pièce (4) respectivement supérieure.

5. Dispositif selon la revendication 4,
**caractérisé en ce que**
l'une au moins des deux barres de butée (16, 18) est la barre de butée (16) à gradin.

6. Dispositif selon l'une au moins des revendications précédentes 1 à 5,
**caractérisé en ce que**
le dispositif de butée (16, 18) peut être déplacé en hauteur dans la direction Z.

7. Dispositif selon l'une au moins des revendications précédentes 1 à 6,
**caractérisé en ce que**
le dispositif de translation (14, 20) de pièces et/ou le dispositif de retenue (14, 20) de pièces comportent au moins un dispositif à ventouse (20).

8. Dispositif selon la revendication 7,
**caractérisé en ce que**
le dispositif à ventouse (20) est disposé de façon à pouvoir être déplacé (30, 32) dans une direction X vers l'au moins un dispositif de butée (16) et éloigné de ce dernier, et/ou dans une direction Y sensiblement perpendiculaire à celle-ci.

9. Dispositif selon la revendication 7 ou 8,
**caractérisé en ce que**
l'au moins un dispositif à ventouse (20) peut être déplacé (22, 24) d'une position de travail située au-dessus de la pièce supérieure (4a) dans une position de mise à disposition située en-dehors d'un format de plaque de la pièce supérieure (4a).

10. Dispositif selon l'une au moins des revendications précédentes 7 à 9,
**caractérisé en ce que**
le dispositif à ventouse possède au moins un élément à ventouse (20) pouvant se déformer élastiquement.

11. Dispositif selon l'une au moins des revendications précédentes,
**caractérisé en ce que**
le dispositif de translation de pièces et le dispositif de retenue de pièces forment une unité fonctionnelle (14).

12. Dispositif selon l'une au moins des revendications précédentes,
**caractérisé en ce que**
le magasin (6) de pile de pièces et/ou sa zone de réception (8) de pile de pièces et/ou son dispositif de levage (10) sont agencés de façon à pouvoir basculer.
